# EUROPEAN PATENT APPLICATION

(11) **EP 1 855 099 A1**
(43) Date of publication of application: **14.11.2007**
(21) Application number: 06113604.0
(22) Date of filing: 08.05.2006
(51) Int. Cl.: G01N 15/14

(54) **Device for controlling the rate of processing**

(71) Applicant: FOSS Analytical A/S, 3400 Hilleroed (DK)
(72) Inventor: Tomsen, Henrik, DK-3400, Hillerød (DK); Frandsen, Anders, DK-3550, Slangerup (DK); Born, Christian, DK-2840, Holte (DK); Larsen, Ole Brix, DK-3450, Allerød (DK); Holm, Claus, DK-2100, København Ø (DK)
(74) Representative: Hilton, Charles Paul

(57) **Abstract**

Processing instrumentation comprises a processing element (2) for performing a substantially same processing operation on each of a plurality of substantially identical items (6) and a control element (4) configured to control the processing element (2) to operate at a first cadency selected to make available a predetermined maximum number of processing operations of the processing element (2) in a predetermined operating period. The control element (4) is further configured to selectably control the processing element (2) to operate at a second, different cadency whilst maintaining the number of processing operations available in the predetermined operating period at the predetermined maximum number.

## Description

The present invention relates to processing instrumentation of the type described in the preamble to Claim 1 and in particular to processing instrumentation adapted to analyse biological fluid to determine the presence of biological particles.

There exist many types of processing instrumentation that by means of one or both of software and hardware inhibitions have their processing capacities of items to be processed limited in number. Analysis instrumentation is just one example of the type of instrumentation in which the number of items processed, here analysed, in a predetermined operating period (typically per 8 hour working day) is often limited to a predetermined maximum.

In analysis instrumentation, as in other processing instrumentation, this is typically achieved by configuring a controller, usually in software, to fix the cadency (rate of processing) at an appropriate level. This level is selected to ensure that the instrumentation must be operated over the entire predetermined period in order to achieve the predetermined maximum number of processed items. In the absence of any inhibitionsuch instrumentation is actually usually capable of operating at a higher cadency. As this instrumentation is typically priced according to the numerical processing capacity it is important to both the seller and the purchaser that the price differential according to throughput is maintained.

However, it is appreciated by the inventor that it would be an advantage to the purchaser to have instrumentation operating at a higher cadency. Contra this, sellers of instrumentation have an interest in maintaining the price differential based on the maximum number of available processing operations.

According to the present invention there is provided processing instrumentation as described in and characterised by the present Claim 1. By providing processing instrumentation configured to selectably operate at a higher cadency or one of a plurality of higher cadencies whilst maintaining a predetermined numerical maximum number of items processed by the instrumentation in an operating period then instrumentation is realised in which the conflicting interests of seller and purchaser are resolved.

Usefully, the second cadency may be higher than the first so that the total number of processing operations can be effected in a shorter time. Operator salaries and other running costs may, in this manner be reduced.

These and other advantages will become apparent from a consideration of the following description of an exemplary embodiment of instrumentation according to the present invention made with reference to the drawing of the accompanying figure, of which:

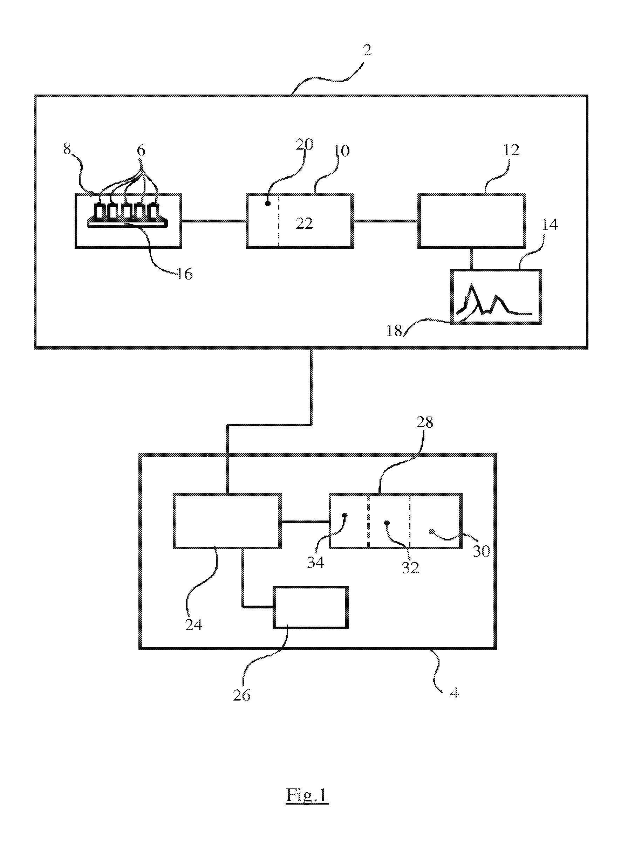

Fig. 1 shows schematically exemplary processing instrumentation according to the present invention.

The processing instrumentation of Fig. 1 may be considered to functionally comprise a processing element 2 and a control element 4 which may be both housed in the same housing or which may be provided as physically separate units. It is envisaged that the processing element 2 may be adapted to perform any one of a large number of differentbut repetitive processing operations on examples of a physical item 6 without departing from the invention as claimed. However, for ease of understanding the remaining description will be of an exemplary embodiment in which the processing element 2 is specifically adapted to perform, in a known manner, a quantitative and/or a qualitative optical analysis of fluid samples, each one of which originates from a different example of the physical item 6. In particular the processing element 2 will be described with reference to the analysis of milk or other biological fluid for the quantitative determination of bacterial agents or other biological particles therein. Such processing instrumentation is described in detail in respect of bacterial counters for milk in for example US 6,157,692 and US 5,978,435, the contents of both of which are incorporated herein by reference, and shall only be described in such detail as necessary for the understanding of the present invention.

In the present embodiment the processing element 2 is illustrated as comprising a sample presentation unit 8; a sample preparation unit 10; a sample measurement unit 12; and an output unit 14.

The sample presentation unit 8 comprises a conveyor 16 on which a plurality of test tubes 6 holding milk samples as the physical items to be processed are placed. The sample preparation unit 10 is provided with a sampling device, here a pipette 20, by which an individual sample of the milk in a one of the test tubes 6 is introduced into the sample preparation unit 10. The conveyor 16 is arranged with respect to the pipette 20 so that it can be operated to move each test tube 6 in turn to the pipette 20 at a predetermined rate corresponding to a selected cadency.

The so collected milk sample is then prepared for measurement within an incubation unit 22 of the sample preparation unit 10. The incubation unit 22 comprises means for introducing into the milk sample an incubation liquid containing a fluorescent stain that in a known manner selectively stains the particles, here bacteria, to be counted.

After the sample has been prepared it is passed from the sample preparation unit 10 to the measurement unit 12 which in the presently described embodiment comprises a conventional flow cytometer. Thus the measurement unit 12 operates to expose the thin layer of milk sample to a light beam, typically from a laser source, at a measuring point. This light beam causes stained bacteria to emit a fluorescent light pulse, basically one per stained bacteria. These pulses are counted and the results presented to the output unit 14. According to the present example the output unit 14 includes a display device on which the counts may be displayed graphically in a so-called 'pulse height analysis diagram' 18.

The above described processing element 2 is generally known in the art. In the known processing instrumentation a computerised controller 24 is programmed to control the processing element 2 to ensure a predetermined cadency. This may simply be achieved by controlling the operating speed of the conveyor 16, provided of course that the operation of the other units 10,12 are not a limiting factor in the measurement process. For example the processing element 2 may be capable of performing bacteria counting of a sample (sample processing operation) at a maximum rate of say 150 samples per hour but the conveyor may be controlled by the controller 24 to present test tubes 6 to the pipette 20 at a lower rate.This permits examples of the instrumentation to be sold having different cadencies, say 150; 100 and 80 samples per hour which correspond to a maximum number of physical items capable of being processed in a 24 hour operating period of 3600; 2400; 1920 respectively.

For ease of understanding of the present invention it will be assumed, by way of example only, that the controller 24 is programmed to provide the processing instrumentation with a maximum number of processing operations of 1920 in a 24 hour period (a first cadency of 80 samples per hour). The exemplary control element 4 according to the present invention is configured with the controller 24 suitably programmed to provide the processing instrumentation 2 with a second cadency selectable from 100 or 150 samples per hour but limited to the maximum number of processing operations set at 1920 in a 24 hour period.

In the present embodiment the control element 4 is provided with a selector 26, such as a switch or graphical user interface of a computer screen, by which an operator can select a desired, predetermined cadency, here one of three possible cadencies from 80, 100 or 150 samples per hour. To ensure that the processing element 2 does not exceed the maximum number of processing operations in the set period (here 24 hours) a counter unit 28 is included in the control element 4. This counter unit 28 is provided with the number of test tubes 6 (items to be processed) provided to the pipette 20.

This may be achieved by configuring the controller 24 to output to the counter unit 28 an indication, such as an electrical pulse, whenever the conveyor 16 is operated to advance on test tube 6 to the pipette 20. In another embodiment each test tube 6 may be provided with a machine readable unique identifier, such as by means of a bar code, a radio frequency tag or magnetic tag say, and a complementary reader provided, say proximal the pipette 20. In this manner each item (test tube 6) that is presented to the processing element 2 can be uniquely identified and a count signal provided to the counter unit 28. In one embodiment it is assumed that the predetermined operating period is always defined by the period between switch on and switch off of the power to the processing instrumentation. The counter unit 28 is then adapted to monitor changes in state of power supply to the instrumentation and to correlate the count with this period.

In an alternative configuration of the present embodiment. The counter unit 28 may be provided with a memory 30 in which a count is stored representing the number of processing operations performed during a previous period during which power is switched on. The counter unit 28 is then configured to update this stored count at least as the power is switched off but preferably at frequent intervals when power is on. A timer 32 is then also provided to generate a temporal indication which is correlated in the counter unit 28 with the count. The counter unit 28 may also be provided with a standby batterypower supply 34 to ensure uninterrupted operation of the timer unit 32 when external power to the processing instrumentation is switched off.

In the event that the correlation indicates that predetermined maximum number of processing operations in the predetermined operating period has been reached then the counter unit 28 is configured to provide an output to the controller 24 which causes the controller 24 to stop the operation of the processing element 2. Preferably, but not essentially, a human discernable warning, such as an audible warning or a visual warning, usefully generated by the output 14, is provided before the processing element 2 is stopped. The processing instrumentation is typically maintained in this state until the timer 32 provides an indication of a start of a new operating period. The counter unit 28 may be configured to reset the count to zero in memory 30 and to provide an output to the controller 24 usable to resume the operation of the processing element 2.

It will be appreciated by the person skilled in the art that modifications to the exemplary embodiment are possible whilst still remaining within the invention as claimed. Other biological fluids and/or other biological particles may be processed by means of the processing element. Indeed the processing element may be an element for carrying out a same processing operation on a different one of a plurality of same or similar items, for example the processing element may comprise a form press configured to perform a processing operation by way of stamping a form in a metal or plastic blank.

## Claims

1. Processing instrumentation comprising a processing element (2) for performing a processing operation on an item (6); and a control element (4) configuredto control the processing element (2) to operate at a first cadency selected to make available a predetermined maximum number of processing operations of the processing element (2) in a predetermined operating period **characterised in that** the control element (4) is further configured to selectably control the processing element (2) to operate at a second, different cadency whilst maintaining the number of processing operations available in the predetermined operating period at the predetermined maximum number.

2. Processing instrumentation as claimed in Claim 1 **characterised in that** the control element (4) is configured to provide the second cadency selectable from a plurality of different cadencies.

3. Processing instrumentation as claimed in Claim 1 or claim 2 **characterised in that** the control element (4) is configured to provide the second cadency higher than the first cadency.

4. Processing instrumentation as claimed in any preceding claim **characterised in that** the control element (4) comprises a counter unit (28) configured to compare a count of processing operations with the predetermined maximum number and to generate an output indicative of the count being at least equal to the maximum number.

5. Processing instrumentation as Claimed in Claim4 **characterised in that** the control element (4) further comprises a timer (32) adapted to generate a temporal indication for correlation in the counter unit (28) with the count.

6. Processing instrumentation as claimed in any preceding claim **characterised in that** the processing element (2) comprises means (10,12) for determining the presence of biological particles in a biological fluid.

7. Processing instrumentation as claimed in Claim 6 **characterised in that** the means (10,12) for determining the presence of biological particles is adapted to determine the presence of one or both of somatic cells and bacteria in milk.
